# FASCICULE DE BREVET EUROPEEN

(11) **EP 4 107 840 B1**
(45) Date de publication et mention de la délivrance du brevet: **28.02.2024**
(21) Numéro de dépôt: 21719687.2
(22) Date de dépôt: 13.01.2021
(51) Int. Cl.: H02J 7/00, H02J 7/14, B60R 16/03, B60W 20/13

(54) **PROCÉDÉ DE PRIORISATION D'UNE ALIMENTATION ÉLECTRIQUE D'UN RÉSEAU DE BORD ET VÉHICULE CONSTRUIT ET AGENCÉ POUR METTRE EN OEUVRE LES ÉTAPES DU PROCÉDÉ**
VERFAHREN ZUR PRIORISIERUNG EINER ELEKTRISCHEN STROMVERSORGUNG EINES BORDNETZES UND FAHRZEUG, DAS ZUR DURCHFÜHRUNG DER SCHRITTE DES VERFAHRENS KONSTRUIERT UND ANGEORDNET IST
METHOD FOR PRIORITIZING AN ELECTRIC POWER SUPPLY TO AN ON-BOARD NETWORK UND VEHICLE CONSTRUCTED AND ARRANGED TO CARRY OUT THE STEPS OF THE METHOD

(30) Priorité: 21.02.2020 FR 2001728
(43) Date de publication de la demande: 28.12.2022
(73) Titulaire: Stellantis Auto SAS, 78300 Poissy (FR)
(72) Inventeur: BOTCHON, Yannick, 92160 ANTONY (FR)
(86) Numéro de dépôt international: PCT/FR2021/050055
(87) Numéro de publication internationale: WO 2021/165590

(56) Documents cités:
- DE-A1-102014 208 999
- FR-A1- 2 982 437
- FR-A1- 3 001 931
- FR-A1- 3 067 185

## Description

La présente invention revendique la priorité de la demande française N° 2001728 déposée le 21.02.2020.

Un aspect de l'invention se rapporte à un procédé de priorisation d'une alimentation électrique d'un réseau de bord par rapport à la recharge d'un stockeur d'énergie électrique de véhicule, notamment automobile. Un autre aspect de l'invention porte sur un véhicule, notamment automobile, construit et agencé pour mettre en oeuvre les étapes d'un procédé de priorisation d'une alimentation électrique d'un réseau de bord par rapport à la recharge d'un stockeur d'énergie électrique de véhicule.

Lors de la charge d'un stockeur d'énergie électrique, par exemple formé par une batterie de véhicule, un courant excessif peut être généré par le chargeur, ce qui altère nécessairement la durée de vie de la batterie. Il est connu de la demande de brevet WO2018/205425 A1, un procédé de charge d'une batterie de véhicule automobile visant à résoudre le risque d'altération de la durée de vie d'une batterie automobile pouvant être engendré par un courant excessif.

On connaît également du document FR-A1-3001931 un circuit embarqué d'un véhicule et comprenant un générateur électrique, une batterie et système de gestion de l'énergie électrique incluant des moyens de limitation de la tension et du courant appliqués à la batterie intégrant des contraintes de tension minimale appliquée à un réseau de bord.

On connaît en outre du document DE-A1-102014208999 un système électrique embarqué de véhicule comprenant deux batteries et dans lequel l'énergie en mode freinage est récupérée pour recharger les deux batteries. La tension aux bornes de la batterie montée en parallèle avec le générateur est maintenue en deçà d'une valeur limite. Enfin selon l' approche suivie dans FR 2 983 437 A1 la tension aux bornes de du réseau de bord et du stockeur d' énergie est abaissée pour alimenter spécifiquement le réseau de bord. Dans ce cas la tension coté réseau de bord est inférieure au seuil de tension autorisant la recharge du stockeur.

Néanmoins, un tel procédé ne permet pas de résoudre le problème d'une saturation du producteur d'énergie électrique utilisé d'une part, pour recharger une batterie de puissance d'un véhicule automobile et, d'autre part, pour alimenter les composants du réseau de bord du véhicule.

En effet, si une utilisation d'un stockeur d'énergie électrique 12V au Lithium, comme batterie de servitude dans le domaine automobile, apporte des avantages conséquents, ce type de stockeur d'énergie électrique dispose d'une résistance interne qui engendre des courants de charge pouvant naturellement être très importants s'ils ne sont pas activement maitrisés. Cela peut devenir problématique dans le cas d'un producteur électrique de faible capacité destiné à alimenter un réseau de bord d'un véhicule, et à charger le stockeur d'énergie électrique 12V au Lithium. Une non maitrise des courants du stockeur d'énergie électrique 12V, en charge notamment, peut entrainer une saturation non souhaitée du producteur d'énergie électrique et une insuffisance d'énergie électrique pour alimenter des composants du réseau de bord.

Le but de l'invention est de pallier les inconvénients de l'art antérieur en proposant un procédé de priorisation d'une alimentation électrique d'un réseau de bord par rapport à la recharge d'une batterie de véhicule permettant de recharger un stockeur d'énergie électrique sans impacter l'alimentation électrique des composants du réseau de bord.

Dans ce contexte, l'invention se rapporte ainsi, dans son acceptation la plus large, à un procédé de priorisation d'une alimentation électrique d'un réseau de bord par rapport à la recharge d'un stockeur d'énergie électrique de véhicule, notamment automobile, ledit procédé comportant :
- Une étape d'activation, par un calculateur, d'une priorisation d'alimentation électrique du réseau de bord lorsque les conditions suivantes sont vérifiées:
   - Un pourcentage estimé du taux de charge d'un producteur d'énergie électrique est supérieur ou égal à un taux de charge maximal prédéterminé,
   - Un courant estimé d'un stockeur d'énergie électrique est supérieur ou égal à un courant d'activation prédéterminé, et
   - Aucune demande de saturation volontaire dudit producteur d'énergie électrique en vue de récupérer de l'énergie cinétique du véhicule n'est demandée,
- Une étape de déterminer une tension devant être appliquée aux bornes dudit stockeur d'énergie électrique par le producteur d'énergie électrique,
- Une étape de transmettre, par ledit calculateur, une consigne de tension maximale, ladite consigne de tension maximale étant égale à ladite tension déterminée devant être appliquée aux bornes dudit stockeur d'énergie électrique.

Grâce à l'invention, en fonction du niveau de sollicitation du producteur d'énergie électrique et du niveau de charge du stockeur d'énergie électrique, une priorisation d'une alimentation électrique d'un réseau de bord par rapport à la recharge d'une batterie de véhicule est réalisée. Cette priorisation est réalisée en gérant la tension aux bornes du stockeur d'énergie électrique. Le stockeur d'énergie électrique peut par exemple être formé par au moins une batterie 12V de type Lithium ion ou une batterie au plomb. Cette priorisation permet d'assurer la recharge de la batterie du véhicule sans pour autant impacter l'alimentation des composants du réseau de bord.

Outre les caractéristiques qui viennent d'être évoquées dans le paragraphe précédent, le procédé de priorisation d'une alimentation électrique d'un réseau de bord par rapport à la recharge d'un stockeur d'énergie électrique selon un aspect de l'invention peut présenter une ou plusieurs caractéristiques complémentaires parmi les suivantes, considérées individuellement ou selon toutes les combinaisons techniquement possibles.

Selon un aspect de l'invention, si la tension devant être appliquée aux bornes du stockeur d'énergie électrique déterminée est supérieure à une tension du stockeur d'énergie électrique maximale prédéterminée, alors la consigne de tension maximale est égale à la tension du stockeur d'énergie électrique maximale prédéterminée.

Selon un aspect de l'invention, la tension déterminée devant être appliquée aux bornes du stockeur d'énergie électrique est fonction,
- d'une résistance interne estimée du stockeur d'énergie électrique,
- d'une tension à vide estimée du stockeur d'énergie électrique,
- d'une température estimée du stockeur d'énergie électrique, et
- d'un état de charge estimé du stockeur d'énergie électrique.

Selon un aspect de l'invention, la tension à vide estimée du stockeur d'énergie électrique OCVse = Use - (lse*Rse), avec
- Use = une tension estimée du stockeur d'énergie électrique, et
- Ise = le courant estimé du stockeur d'énergie électrique.

Selon un aspect de l'invention, la tension déterminée devant être appliquée aux bornes du stockeur d'énergie électrique est égale à OCVse + (Rse*Ise_I), avec Ise_I = courant limite du stockeur d'énergie électrique fonction de l'état de charge du stockeur d'énergie électrique estimé et d'une température du stockeur d'énergie électrique.

Selon un aspect de l'invention, le procédé comporte une étape d'arrêt, par le calculateur, d'une application de la consigne de tension maximale si le pourcentage du taux de charge estimé du producteur électrique est inférieur ou égal à un taux de charge maximal de désaturation prédéterminé et le courant estimé du stockeur d'énergie électrique est inférieur ou égal à un courant du stockeur d'énergie électrique de désactivation prédéterminé.

Selon un aspect de l'invention, le procédé comporte une étape d'arrêt, par le calculateur, d'une application de la consigne de tension maximale si une demande de saturation volontaire dudit producteur d'énergie électrique en vue de récupérer de l'énergie cinétique du véhicule est demandée.

Selon un aspect de l'invention, le stockeur d'énergie électrique est un stockeur Lithium ion 12V.

Selon un aspect de l'invention, le producteur d'énergie électrique est une machine électrique tournante ou un système comportant au moins un stockeur d'énergie électrique et un convertisseur construit et agencé pour convertir une tension continue en une tension continue différente.

Un autre aspect, l'invention concerne un véhicule, notamment automobile, construit et agencé pour mettre en oeuvre les étapes du procédé de priorisation d'une alimentation électrique d'un réseau de bord par rapport à la recharge d'un stockeur d'énergie électrique de véhicule selon l'une au moins des réalisations précitées.

L'invention et ses différentes applications seront mieux comprises à la lecture de la description qui suit et à l'examen des figures qui l'accompagnent.

[Fig. 1] illustre de façon schématique un procédé de priorisation d'une alimentation électrique d'un réseau de bord par rapport à la recharge d'un stockeur d'énergie électrique de véhicule selon un mode de réalisation de l'invention.

[Fig. 2] représente de façon schématique un exemple de réalisation d'un véhicule conforme à un aspect de l'invention, le véhicule étant construit et agencé pour mettre en oeuvre les étapes d'un procédé de priorisation d'une alimentation électrique d'un réseau de bord par rapport à la recharge d'un stockeur d'énergie électrique de véhicule.

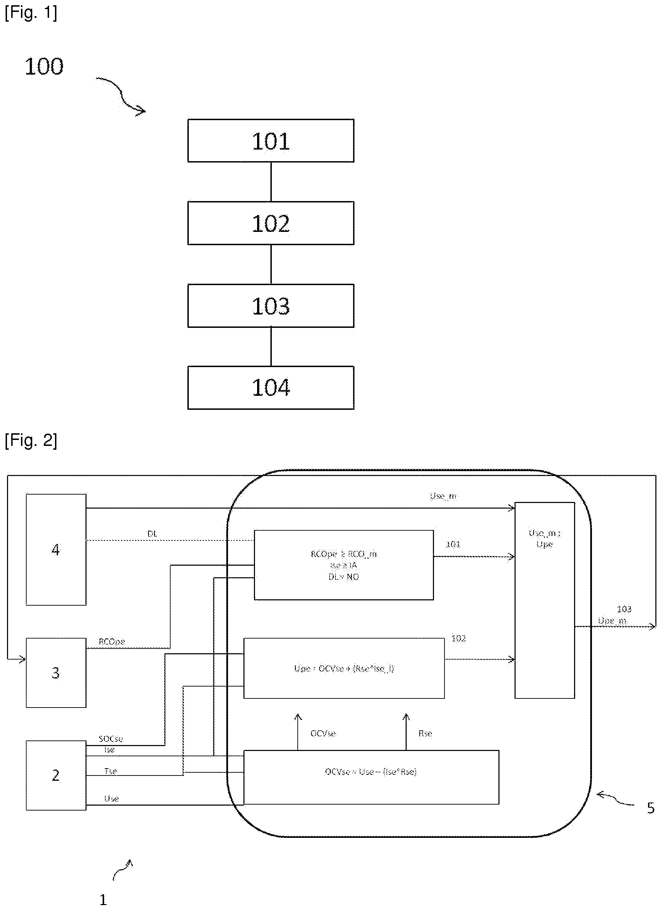

Pour la suite de la description, on se référera indifféremment aux figures 1 et 2.

La figure 1 illustre un exemple de mise en oeuvre d'un procédé 100 de priorisation d'une alimentation électrique d'un réseau de bord par rapport à la recharge d'un stockeur d'énergie électrique de véhicule selon un aspect de l'invention.

La figure 2 illustre un autre aspect de l'invention portant sur un véhicule 1 construit et agencé pour mettre en oeuvre le procédé 100 de priorisation d'une alimentation électrique d'un réseau de bord par rapport à la recharge d'un stockeur d'énergie électrique de véhicule conforme à l'invention. A cette fin, le véhicule 1 comporte
- un stockeur d'énergie électrique 2,
- un producteur électrique 3,
- un contrôleur 4, et
- un calculateur 5.

Le procédé 100 comporte une étape 101 d'activation, par le calculateur 5, d'une priorisation d'alimentation électrique du réseau de bord lorsque les conditions suivantes sont vérifiées
- Un pourcentage estimé du taux de charge du producteur d'énergie électrique RCOpe est supérieur ou égal à un taux de charge maximal RCO_m prédéterminé,
- Un courant estimé du stockeur d'énergie électrique Ise est supérieur ou égal à un courant d'activation IA prédéterminé, et
- Aucune demande de saturation volontaire DL du producteur d'énergie électrique 3 n'est demandée

Une demande de saturation volontaire DL peut par exemple être effectuée lors d'un freinage récupératif au cours duquel le producteur d'énergie électrique 3, formé par une machine électrique tournante, transforme l'énergie mécanique en énergie électrique pour recharger le stockeur d'énergie 2.

Dans un exemple de réalisation, le stockeur d'énergie électrique 2 est formé par une batterie 12V de type Lithium ion. Le producteur d'énergie électrique 3 peut être une machine électrique tournante de type alternateur ou alterno-démarreur. Dans un exemple de réalisation différente, le producteur d'énergie électrique 3 peut être formé par un système comportant un stockeur d'énergie électrique et un convertisseur construit et agencé pour transformer une tension continue en une tension continue différente. Par exemple, ce type de système est en mesure de convertir une tension de 48V ou 300V vers une tension de 12V.

Le taux de charge maximal RCO_m prédéterminé est formé par un pourcentage du taux de charge maximal à partir duquel le producteur d'énergie électrique est considéré comme étant en saturation. Par exemple, le taux de charge maximal RCO_m prédéterminé peut être fixé à 95%.

Le courant d'activation IA prédéterminé est formé par le courant du stockeur d'énergie électrique au-dessus duquel il est nécessaire de limiter le courant prélevé par le stockeur 12V, pour désaturer le producteur, en activant la stratégie de priorisation. Par exemple, le courant d'activation IA prédéterminé peut être fixé à 20A.

Ces trois conditions nécessaires à l'étape 101 d'une priorisation d'alimentation électrique du réseau de bord sont vérifiées par le calculateur 5. A cette fin, le pourcentage estimé du taux de charge du producteur d'énergie électrique RCOpe est transmis par le producteur d'énergie électrique 3 au calculateur 5. Le courant estimé du stockeur d'énergie électrique Ise est transmis par le stockeur d'énergie électrique 2 au calculateur 5. Si aucune demande de saturation volontaire DL n'est transmise du contrôleur 4 au calculateur 5, alors le calculateur 5 est en mesure de déclencher l'étape 101. Cette stratégie de priorisation est activée seulement lorsque le système de gestion globale de l'énergie électrique 12V du véhicule ne sature pas intentionnellement le producteur d'énergie électrique en vue de récupérer de l'énergie cinétique du véhicule. C'est le cas notamment, en phase de lestage de l'alternateur pour réaliser de la récupération d'énergie, en décélération ou en freinage.

Cette étape 101 d'activation d'une priorisation d'alimentation électrique du réseau de bord par rapport à la recharge du stockeur d'énergie permet de détecter les phases de saturation du producteur d'énergie électrique 12V du véhicule et détermine les autorisations d'activation de la stratégie de priorisation, par limitation du courant prélevé par le stockeur 12V.

Dès lors que l'étape 101 d'activation est déclenchée, le procédé 100 comporte une étape 102 de déterminer une tension Upe devant être appliquée aux bornes du stockeur d'énergie électrique par le producteur d'énergie électrique.

Le procédé 100 comporte en outre une étape 103 de transmettre, par le calculateur 5, une consigne de tension maximale Upe_m, la consigne de tension maximale Upe_m étant égale à la tension Upe déterminée devant être appliquée aux bornes du stockeur d'énergie électrique 2 par le producteur d'énergie électrique 3.

Il convient de noter qu'un stockeur d'énergie électrique 12V Lithium ion a tendance à prélever un maximum de courant du producteur d'énergie électrique 3 pour se charger, si aucune stratégie de maitrise de ce courant n'est mise en place, ce qui n'est pas un comportement souhaitable, en particulier avec un producteur d'énergie électrique 3 de faible capacité qui doit également alimenter le réseau de bord. La consigne de tension maximale Upe_m permet de déterminer une limite de tension à prendre en compte au niveau de la batterie Lithium ion 12V, notamment pour désaturer le producteur d'énergie électrique 3 et permettre une bonne alimentation du réseau de bord. Pour ce faire, on limite le courant prélevé par ce stockeur d'énergie électrique de type Lithium ion 12V.

Selon un aspect de l'invention, si la tension Upe devant être appliquée aux bornes du stockeur d'énergie électrique déterminée est supérieure à une tension du stockeur d'énergie électrique maximale Use_m prédéterminée, alors la consigne de tension maximale Upe_m est égale à la tension du stockeur d'énergie électrique maximale Use_m prédéterminée.

La tension du stockeur d'énergie électrique maximale Use_m prédéterminée est une consigne de tension batterie maximale déterminée pour prendre en compte divers besoins et contraintes comme notamment une durabilité batterie, une récupération d'énergie électrique ou encore une performance de certains composants du réseau de bord. Cette sélection produit donc, la limite de tension batterie qui devra être prise en compte, par un système de gestion d'énergie électrique global, pour déterminer par la suite la consigne de tension maximale Upe_m de priorisation devant être appliquée aux bornes du stockeur d'énergie électrique par le producteur d'énergie électrique.

Selon un aspect de l'invention, la tension Upe devant être appliquée aux bornes du stockeur d'énergie électrique déterminée est fonction,
- d'une résistance interne estimée du stockeur d'énergie électrique Rse,
- d'une tension à vide estimée du stockeur d'énergie électrique OCVse,
- d'une température estimée du stockeur d'énergie électrique Tse, et
- d'un état de charge estimé du stockeur d'énergie électrique SOCse.

La résistance interne estimée du stockeur d'énergie électrique Rse est estimée à partir de la température de la batterie 12V Lithium ion. Par exemple, la résistance interne estimée du stockeur d'énergie électrique Rse peut être déterminée par le calculateur 5 en utilisant une cartographie préétablie. Pour ce faire, le stockeur d'énergie électrique 2 transmet sa température Tse au calculateur 5.

Selon un aspect de l'invention, la tension à vide estimée du stockeur d'énergie électrique OCVse = Use - (lse*Rse), avec
- Use = une tension estimée du stockeur d'énergie électrique 2, et
- Ise = le courant estimé du stockeur d'énergie électrique 2.

Cette tension à vide estimée du stockeur d'énergie électrique OCVse est estimée par le calculateur 5. Pour ce faire, le stockeur d'énergie électrique 2 transmet sa tension estimée Use et son courant estimé Ise au calculateur 5.

Cette tension à vide estimée peut ensuite être filtrée, en utilisant par exemple un filtre passe bas du premier ordre, de façon à disposer d'une information dont le bruit a été traité.

Selon un aspect de l'invention, la tension Upe devant être appliquée aux bornes du stockeur d'énergie électrique déterminée est égale à OCVse + (Rse*Ise_I), avec
- Ise_I = courant limite du stockeur d'énergie électrique fonction d'un état de charge du stockeur d'énergie électrique estimé SOCse et d'une température du stockeur d'énergie électrique Tse.

Le courant limite du stockeur d'énergie électrique Ise_I peut être déterminé par le calculateur 5 au moyen d'une cartographie prédéterminée fonction d'un état de charge du stockeur d'énergie électrique estimé SOCse et d'une température du stockeur d'énergie électrique Tse. A cette fin, le stockeur d'énergie électrique 2 transmet sa température Tse et son état de charge estimé SOCse au calculateur 5.

Ce calcul a pour objectif de déterminer la tension maximale autorisée aux bornes du stockeur d'énergie électrique Lithium ion 12V, en fonction du courant maximal cible voulu pour ce stockeur d'énergie électrique 3. Ce courant peut être un courant maximal positif (charge), nul (maintien de charge) ou négatif (décharge de la batterie).

Selon un aspect de l'invention, le procédé 100 comporte une étape 104 d'arrêt d'une application de la consigne de tension maximale Upe_m si :
- le pourcentage du taux de charge estimé du producteur électrique RCOpe est inférieur ou égal à un taux de charge maximal de désaturation RCOd_m prédéterminé et le courant estimé du stockeur d'énergie électrique Ise est inférieur ou égal à un courant du stockeur d'énergie électrique de désactivation Ise_D prédéterminé, ou
- une demande de saturation volontaire du producteur d'énergie électrique 3 est demandée.

Le taux de charge maximal de désaturation RCOd_m prédéterminé est un pourcentage du taux de charge maximal à partir duquel le producteur d'énergie électrique 3 n'est plus en saturation de façon stabilisée. Par exemple, le taux de charge maximal de désaturation RCOd_m prédéterminé peut être fixé à 70%.

Le courant du stockeur d'énergie électrique de désactivation Ise_D prédéterminé est un courant du stockeur d'énergie électrique en dessous duquel il est possible de désactiver la stratégie de désaturation du producteur électrique 3. Par exemple, le courant du stockeur d'énergie électrique de désactivation Ise_D peut être fixé à 5A.

D'une manière générale, grâce à l'invention, lorsque que l'on souhaite dimensionner au plus juste, pour des raisons économiques, le producteur d'énergie électrique 3 d'un véhicule utilisant un stockeur Lithium ion, il est possible de piloter le courant prélevé par le stockeur électrique 2.

## Revendications

1. Procédé (100) de priorisation d'une alimentation électrique d'un réseau de bord par rapport à la recharge d'un stockeur d'énergie électrique (2) de véhicule, ledit procédé (100) étant **caractérisé en ce qu'**il comporte :
- Une étape (101) d'activation, par un calculateur (5), d'une priorisation d'alimentation électrique du réseau de bord lorsque les conditions suivantes sont vérifiées:
∘ Un pourcentage estimé du taux de charge d'un producteur d'énergie électrique (RCOpe) est supérieur ou égal à un taux de charge maximal (RCO_m) prédéterminé,
∘ Un courant estimé d'un stockeur d'énergie électrique Ise est supérieur ou égal à un courant d'activation (IA) prédéterminé, et
∘ Aucune demande de saturation volontaire (DL) dudit producteur d'énergie électrique (3) en vue de récupérer de l'énergie cinétique du véhicule n'est demandée,
- Une étape de déterminer (102) une tension (Upe) devant être appliquée aux bornes dudit stockeur d'énergie électrique (2) par le producteur d'énergie électrique (3),
- Une étape (103) de transmettre, par ledit calculateur (5), une consigne de tension maximale (Upe_m), ladite consigne de tension maximale (Upe_m) étant égale à ladite tension (Upe) déterminée devant être appliquée aux bornes dudit stockeur d'énergie électrique (2).

2. Procédé (100) selon la revendication 1 **caractérisé en ce que** si la tension (Upe) déterminée devant être appliquée aux bornes du stockeur d'énergie électrique (2) est supérieure à une tension du stockeur d'énergie électrique maximale (Use_m) prédéterminée, alors la consigne de tension maximale (Upe_m) est égale à la tension du stockeur d'énergie électrique maximale (Use_m) prédéterminée.

3. Procédé (100) selon l'une quelconque des revendications précédentes **caractérisé en ce que** la tension (Upe) déterminée devant être appliquée aux bornes du stockeur d'énergie électrique est fonction,
- d'une résistance interne estimée du stockeur d'énergie électrique Rse,
- d'une tension à vide estimée du stockeur d'énergie électrique (OCVse),
- d'une température estimée du stockeur d'énergie électrique (Tse), et
- d'un état de charge estimé du stockeur d'énergie électrique (SOCse).

4. Procédé (100) selon la revendication 3 précédente **caractérisé en ce que** la tension à vide estimée du stockeur d'énergie électrique OCVse = Use - (lse*Rse), avec
- Use = une tension estimée du stockeur d'énergie électrique, et
- Ise = le courant estimé du stockeur d'énergie électrique.

5. Procédé (100) selon l'une quelconque des revendications 3 ou 4 **caractérisé en ce que** la tension (Upe) déterminée devant être appliquée aux bornes du stockeur d'énergie électrique est égale à OCVse + (Rse*Ise_I), avec
- Ise_I = courant limite du stockeur d'énergie électrique fonction de l'état de charge du stockeur d'énergie électrique estimé (SOCse) et d'une température du stockeur d'énergie électrique (Tse).

6. Procédé (100) selon l'une quelconque des revendications précédentes **caractérisé en ce qu'**il comporte une étape d'arrêt (104), par le calculateur (5), d'une application de la consigne de tension maximale (Upe_m) si le pourcentage du taux de charge estimé du producteur électrique (RCOpe) est inférieur ou égal à un taux de charge maximal de désaturation (RCOd_m) prédéterminé et le courant estimé du stockeur d'énergie électrique Ise est inférieur ou égal à un courant du stockeur d'énergie électrique de désactivation (lse_D) prédéterminé.

7. Procédé (100) selon l'une quelconque des revendications 1 à 5 **caractérisé en ce qu'**il comporte une étape d'arrêt (104), par le calculateur (5), d'une application de la consigne de tension maximale (Upe_m) si une demande de saturation volontaire dudit producteur d'énergie électrique (3) en vue de récupérer de l'énergie cinétique du véhicule est demandée.

8. Procédé (100) selon l'une quelconque des revendications précédentes **caractérisé en ce que** le stockeur d'énergie électrique (2) est un stockeur Lithium ion 12V.

9. Procédé (100) selon l'une quelconque des revendications précédentes **caractérisé en ce que** le producteur d'énergie électrique (3) est une machine électrique tournante ou un système comportant au moins un stockeur d'énergie électrique et un convertisseur construit et agencé pour convertir une tension continue en une tension continue différente.

10. Véhicule (1) construit et agencé pour mettre en oeuvre les étapes du procédé (100) de priorisation d'une alimentation électrique d'un réseau de bord par rapport à la recharge d'une batterie de véhicule selon l'une au moins des revendications précédentes.

## Patentansprüche

1. Verfahren (100) zur Priorisierung einer elektrischen Versorgung eines Bordnetzes im Hinblick auf das Nachladen eines elektrischen Energiespeichers (2) eines Fahrzeugs, wobei das Verfahren (100) **dadurch gekennzeichnet ist, dass** es Folgendes umfasst:
- Ein Schritt (101) der Aktivierung einer Priorisierung der Stromversorgung des Bordnetzes durch einen Computer (5), wenn die folgenden Bedingungen überprüft werden:
o Ein geschätzter Prozentsatz der Lastrate eines Stromerzeugers (RCOpe) ist größer oder gleich einer vorgegebenen maximalen Lastrate (RCO_m),
o Ein geschätzter Strom eines elektrischen Energiespeichers Ise ist größer oder gleich einem vorgegebenen Aktivierungsstrom (IA) und
o Es wird kein Antrag auf freiwillige Sättigung (DL) des Stromerzeugers (3) gestellt, um kinetische Energie aus dem Fahrzeug zurückzugewinnen.
- einen Schritt des Bestimmens (102) einer Spannung (Upe), die vom Elektroenergieerzeuger (3) an die Anschlüsse des elektrischen Energiespeichers (2) angelegt werden soll,
- einen Schritt (103) zum Übertragen eines maximalen Spannungssollwerts (Upe_m) durch den Rechner (5), wobei der maximale Spannungssollwert (Upe_m) gleich der Spannung (Upe) ist, die bestimmt ist, an die Anschlüsse des Speichers d angelegt zu werden elektrische Energie (2).

2. Verfahren (100) nach Anspruch 1, **dadurch gekennzeichnet, dass**, wenn die an den Anschlüssen des elektrischen Energiespeichers (2) anliegende Spannung (Upe) größer ist als eine vorgegebene Spannung des maximalen elektrischen Energiespeichers (Use_m), dann ist der maximale Spannungssollwert (Upe_m) gleich der vorgegebenen maximalen elektrischen Energiespeicherspannung (Use_m).

3. Verfahren (100) nach einem der vorhergehenden Ansprüche, **dadurch gekennzeichnet, dass** die an den Anschlüssen des elektrischen Energiespeichers anliegende Spannung (Upe) eine Funktion ist,
- ein geschätzter Innenwiderstand des elektrischen Energiespeichers Rse,
- eine geschätzte Leerlaufspannung des elektrischen Energiespeichers (OCVse),
- eine geschätzte Temperatur des elektrischen Energiespeichers (Tse) und
- ein geschätzter Ladezustand des elektrischen Energiespeichers (SOCse).

4. Verfahren (100) nach Anspruch 3, **dadurch gekennzeichnet, dass** die geschätzte Leerlaufspannung des elektrischen Energiespeichers OCVse = Use - (Ise*Rse) ist
- Nutzung = eine geschätzte Spannung des elektrischen Energiespeichers, und
- Ise = der geschätzte Strom des elektrischen Energiespeichers.

5. Verfahren (100) nach einem der Ansprüche 3 oder 4, **dadurch gekennzeichnet, dass** die an den Anschlüssen des elektrischen Energiespeichers anliegende Spannung (Upe) gleich OCVse + (Rse*Ise_I) ist, mit
- Ise_I = Grenzstrom des elektrischen Energiespeichers abhängig vom Ladezustand des geschätzten elektrischen Energiespeichers (SOCse) und einer Temperatur des elektrischen Energiespeichers (Tse).

6. Verfahren (100) nach einem der vorhergehenden Ansprüche, **dadurch gekennzeichnet, dass** es einen Schritt des Stoppens (104) einer Anwendung des maximalen Spannungssollwerts (Upe_m) durch den Computer (5) umfasst, wenn der Prozentsatz des geschätzten Werts beträgt Die Laderate des Stromerzeugers (RCOpe) ist kleiner oder gleich einer vorgegebenen maximalen Entsättigungsladerate (RCOd_m) und der geschätzte Strom des elektrischen Energiespeichers Ise ist kleiner oder gleich einem Strom des Speichers vorgegebener elektrischer Deaktivierungsenergie (Ise_D).

7. Verfahren (100) nach einem der Ansprüche 1 bis 5, **dadurch gekennzeichnet, dass** es einen Schritt des Stoppens (104) einer Anwendung des maximalen Spannungssollwerts (Upe_m) durch den Computer (5) umfasst, wenn eine freiwillige Anforderung vorliegt eine Sättigung des elektrischen Energieerzeugers (3) im Hinblick auf die Rückgewinnung kinetischer Energie aus dem Fahrzeug angefordert wird.

8. Verfahren (100) nach einem der vorhergehenden Ansprüche, **dadurch gekennzeichnet, dass** der elektrische Energiespeicher (2) ein 12V-Lithium-Ionen-Speicher ist.

9. Verfahren (100) nach einem der vorhergehenden Ansprüche, **dadurch gekennzeichnet, dass** der Erzeuger elektrischer Energie (3) eine rotierende elektrische Maschine oder ein System ist, das mindestens einen elektrischen Energiespeicher und einen zur Umwandlung eines Gleichstroms ausgebildeten und angeordneten Wandler umfasst Spannung in eine andere Gleichspannung umwandeln.

10. Fahrzeug (1), konstruiert und eingerichtet zur Durchführung der Schritte des Verfahrens (100) zur Priorisierung einer elektrischen Versorgung eines Bordnetzes im Verhältnis zum Nachladen einer Fahrzeugbatterie nach mindestens einem der vorhergehenden Ansprüche.

## Claims

1. Method (100) for prioritizing an electrical supply of an on-board network with respect to the recharging of a vehicle electrical energy store (2), said method (100) being **characterized in that** it includes:
- A step (101) of activation, by a computer (5), of a prioritization of electrical supply of the on-board network when the following conditions are verified:
o An estimated percentage of the load rate of an electrical energy producer (RCOpe) is greater than or equal to a predetermined maximum load rate (RCO_m),
o An estimated current of an electrical energy store Ise is greater than or equal to a predetermined activation current (IA), and
o No request for voluntary saturation (DL) of said electrical energy producer (3) with a view to recovering kinetic energy from the vehicle is requested,
- A step of determining (102) a voltage (Upe) to be applied to the terminals of said electrical energy store (2) by the electrical energy producer (3),
- A step (103) of transmitting, by said calculator (5), a maximum voltage setpoint (Upe_m), said maximum voltage setpoint (Upe_m) being equal to said voltage (Upe) determined to be applied to the terminals of said storage d electrical energy (2).

2. Method (100) according to claim 1 **characterized in that** if the voltage (Upe) determined to be applied to the terminals of the electrical energy store (2) is greater than a voltage of the maximum electrical energy store (Use_m) predetermined, then the maximum voltage setpoint (Upe_m) is equal to the predetermined maximum electrical energy store voltage (Use_m).

3. Method (100) according to any one of the preceding claims **characterized in that** the voltage (Upe) determined to be applied to the terminals of the electrical energy store is a function,
- an estimated internal resistance of the electrical energy store Rse,
- an estimated no-load voltage of the electrical energy store (OCVse),
- an estimated temperature of the electrical energy store (Tse), and
- an estimated state of charge of the electrical energy store (SOCse).

4. Method (100) according to preceding claim 3 **characterized in that** the estimated no-load voltage of the electrical energy store OCVse = Use - (Ise*Rse), with
- Use = an estimated voltage of the electrical energy store, and
- Ise = the estimated current of the electrical energy store.

5. Method (100) according to any one of claims 3 or 4 **characterized in that** the voltage (Upe) determined to be applied to the terminals of the electrical energy store is equal to OCVse + (Rse*Ise_I), with
- Ise_I = limit current of the electrical energy store depending on the state of charge of the estimated electrical energy store (SOCse) and a temperature of the electrical energy store (Tse).

6. Method (100) according to any one of the preceding claims **characterized in that** it comprises a step of stopping (104), by the computer (5), an application of the maximum voltage setpoint (Upe_m) if the percentage of the estimated charging rate of the electrical producer (RCOpe) is less than or equal to a predetermined maximum desaturation charging rate (RCOd_m) and the estimated current of the electrical energy store Ise is less than or equal to a current of the storer of predetermined deactivation electrical energy (Ise_D).

7. Method (100) according to any one of claims 1 to 5 **characterized in that** it comprises a step of stopping (104), by the computer (5), an application of the maximum voltage setpoint ( Upe_m) if a request for voluntary saturation of said electrical energy producer (3) with a view to recovering kinetic energy from the vehicle is requested.

8. Method (100) according to any one of the preceding claims **characterized in that** the electrical energy store (2) is a 12V Lithium ion store.

9. Method (100) according to any one of the preceding claims **characterized in that** the producer of electrical energy (3) is a rotating electrical machine or a system comprising at least one electrical energy store and a converter constructed and arranged to convert a DC voltage to a different DC voltage.

10. Vehicle (1) constructed and arranged to implement the steps of the method (100) for prioritizing an electrical supply of an on-board network in relation to the recharging of a vehicle battery according to at least one of the preceding claims.
